**Europäisches Patentamt**

**European Patent Office**

**Office européen des brevets**

(19)

(11) Veröffentlichungsnummer: **0 557 311 B1**

## (12) EUROPÄISCHE PATENTSCHRIFT

(45) Veröffentlichungstag der Patentschrift: **20.09.95**

(51) Int. Cl.6: **C08F 2/32**

(21) Anmeldenummer: **91918614.8**

(22) Anmeldetag: **05.11.91**

(86) Internationale Anmeldenummer:
**PCT/EP91/02081**

(87) Internationale Veröffentlichungsnummer:
**WO 92/08744 (29.05.92 92/12)**

(54) **NEUE WASSER-IN-ÖL-EMULSIONEN.**

(30) Priorität: **14.11.90 DE 4036207**
**08.04.91 DE 4111334**

(43) Veröffentlichungstag der Anmeldung:
**01.09.93 Patentblatt 93/35**

(45) Bekanntmachung des Hinweises auf die
Patenterteilung:
**20.09.95 Patentblatt 95/38**

(84) Benannte Vertragsstaaten:
**DE**

(56) Entgegenhaltungen:
**EP-A- 0 068 955**
**EP-A- 0 208 217**

(73) Patentinhaber: **Henkel Kommanditgesellschaft
auf Aktien**

**D-40191 Düsseldorf (DE)**

(72) Erfinder: **SCHIEFERSTEIN, Ludwig**
**Am Hang 15**
**D-4030 Ratingen (DE)**

Erfinder: **FISCHER, Herbert**
**Neustädter Weg 29**
**D-4000 Düsseldorf 1 (DE)**
Erfinder: **KROKE, Hermann**
**Stormstrasse 2**
**D-4020 Mettmann (DE)**
Erfinder: **SPEI, Brigitte**
**Harffstrasse 129a**
**D-4000 Düsseldorf 13 (DE)**
Erfinder: **WEHLE, Volker**
**Alsenstrasse 7**
**D-5657 Haan (DE)**
Erfinder: **JESCHKE, Rainer**
**Am Broichgraben 52**
**D-4000 Düsseldorf 13 (DE)**
Erfinder: **PLOOG, Uwe**
**Haydnweg 6**
**D-5657 Haan (DE)**

**Beschreibung**

Gegenstand der vorliegenden Erfindung sind Wasser-in-Öl-Emulsionen, die ein wasserlösliches oder in Wasser quellbares Emulsionspolymerisat in einer mit Wasser nicht unbegrenzt mischbaren Ölphase enthalten, ein Verfahren zu ihrer Herstellung sowie die Verwendung der invertierten Emulsionen als Flockungs-, Sedimentations- und/oder als Verdickungsmittel.

Wasser-in-Öl-Emulsionen vor allem mit Homo- und/oder Copolymeren des Acrylamids als Emulsionspolymerisat haben als Flüssigprodukte mit hohen Feststoffgehalten und doch handhabbarer Viskosität infolge der Umkehrbarkeit der Emulsionen und der dabei möglichen Herstellung von wäßrigen Polymerisatlösungen breite Anwendung erlangt. Besondere Bedeutung kommt derartigen invertierten Emulsionen als Flockungs- und/oder als Verdickungsmittel bei der Klärung von kommunalen und industriellen Abwässern zu, wo sie eine weitgehende Trennung der festen von der flüssigen Phase ermöglichen. Verfahren zur Herstellung von Wasser-in-Öl-Emulsionen hochmolekularer Verbindungen durch Polymerisation von wassergelösten ethylenisch ungesättigten Monomeren in einer Ölphase sind gut bekannt. Meist besteht dabei die Ölphase aus inerten, hydrophoben Flüssigkeiten vom Typ der aromatischen und/oder der chlorierten Kohlenwasserstoffe wie Mineralöl, Kerosine, Naphthas, Toluol, Xylol, o-Dichlorbenzol, Propylendichlorid und ähnlichem (vgl. DE-A-10 89 173, DE-A-10 81 228, DE-C-21 54 081). Die Verwendung derartiger Emulsionen als Flockungsmittel z.B. in Kläranlagen, birgt infolge des Verbleibens des Öls im zu deponierenden Schlamm eine wachsende Gefahr für die Umwelt. Die DE-A-33 02 069 beschreibt als Flockungsmittel geeignete Präparate, deren Ölphase neben den bereits beschriebenen aromatischen und/oder halogenierten Kohlenwasserstoffen gegebenenfalls natürliche Triglyceride und/oder Fettsäuremonoester enthalten kann. In der EP 208 217 werden entsprechende Emulsionen als umweltfreundliche Flockungsmittel beschrieben, deren Ölphase bis zu 100 Gew.%- bezogen auf Ölphase- aliphatische Dicarbonsäureester enthält. Eigene Untersuchungen haben jedoch ergeben, daß insbesondere hohe Anteile an Säureestern in der Ölphase die Polymerisation der ethylenisch ungesättigten Monomere erheblich stören können, so daß die erhaltenen Dispersionen instabiler werden oder die erhaltenen Emulsionspolymerisate vergleichsweise niedrigere Molekulargewichte aufweisen als üblich. Für Anwendungen werden jedoch Wasser-in-Öl-Emulsionen favorisiert, deren Polymerisate hohe Molekulargewichte und damit eine größere Effektivität aufweisen.

Aufgabe der vorliegenden Erfindung war daher, polymerhaltige Wasser-in-Öl-Emulsionen bereitzustellen, deren Polymere hohe Molekulargewichte aufweisen und deren Ölphase leichter biologisch abbaubar sind als die bislang verwendeten.

Gegenstand der vorliegenden Erfindung sind Wasser-in-Öl-Emulsionen von in Wasser gelösten und/oder in Wasser quellbaren Emulsionspolymerisaten in einer in Wasser nicht unbegrenzt mischbaren flüssigen Ölphase in Anwesenheit von Wasser-in-Öl-Emulgatoren, dadurch gekennzeichnet, daß die Ölphase wenigstens anteilsweise Monoetherverbindungen enthält, wobei die Monoetherverbindungen zwei gleiche oder verschiedene über den Ethersauerstoff gebundene Kohlenwasserstoffreste mit wenigstens 5 C-Atomen tragen.

Im Sinne der Erfindung wird der Begriff der Ölphase vereinfacht für hydrophobe Verbindungen oder Mischungen verschiedener hydrophober Verbindungen verwendet, die in der Emulsion als eine Flüssigphase vorliegen. An die Ölphase werden prinzipiell bestimmte Anforderungen gestellt. So sollte die Mischbarkeit der Ölphase in Wasser derart begrenzt sein, daß die Ölphase mit Wasser ein klares Zweiphasensystem ausbildet. Zweckmäßigerweise enthält daher die Ölphase der erfindungsgemäßen Emulsionen nur geringe Mengen gelöst an Wasser, vorzugsweise unter 0,3 Gew.% und insbesondere unter 0,15 Gew.% - bestimmt bei 20 °C und bezogen auf Ölphase. Des weiteren sollte die Ölphase zumindest bei Zimmertemperatur (20 °C bis 25 °C) in flüssigem Zustand vorliegen und erst unter 0 °C in den festen Zustand übergehen und Siedepunkte aufweisen, die über der Polymerisationstemperatur der zu polymerisierenden Monomeren liegen. Monoetherverbindungen, die diesen rheologischen und die Wasserlöslichkeit betreffenden Anforderungen gerecht werden, kann der Fachmann allen einschlägigen Handbüchern entnehmen, beispielsweise: Industrial Solvents Handbook, 3. Edition, Noyes Data Corporation, New Jersey 1985, Seite 381; D'Ans-Lax, Taschenbuch für Chemiker und Physiker, 2. Band, Organische Verbindungen, 4. Auflage, Springer Verlag 1983. Im Sinne der Erfindung enthält die Ölphase wenigstens anteilsweise Monoetherverbindungen, wobei zwei gleiche oder verschiedene Kohlenwasserstoffreste über den Ethersauerstoff gebunden sind und diese Kohlenwasserstoffreste wenigstens 5 Kohlenstoffatome aufweisen. Diese Untergrenze der notwendigen Kohlenstoffatome für den Kohlenwasserstoffrest der Monoetherverbindungen ergibt sich aus Eigenversuchen. So wurde bei Emulsionspolymerisationsversuchen beobachtet, daß in Anwesenheit von Monoetherverbindungen mit vier oder weniger Kohlenstoffatomen pro Kohlenwasserstoffrest Vergelung auftreten. Bevorzugt werden Monoetherverbindungen, mit gleichen oder verschiedenen aliphatischen, cyclischen und/oder aromatischen gesättigten und/oder ungesättigten Kohlenwasserstoffresten mit 5 bis 24 C-Atomen, vorzugsweise bis 18 C-Atomen, wobei die Kohlenwasserstoffreste, gegebenenfalls einen inerten Substituenten tragen können. Dabei ist zu beachten, daß die Obergrenze der C-Atome der Kohlenwasserstoffreste und die bevorzugten Bereiche nur ungefähre Werte sind, da je nach Charakter des Kohlenwasserstoffrestes die Schmelz- und Siedepunkte stark schwanken (rheologische Anforderungen). Aus Gründen der biologischen Abbaubarkeit werden bevorzugt Monoetherverbindungen mit gleichen oder verschiedenen aliphatischen, verzweigten oder unverzweigten Kohlenwasserstoffresten mit 6 bis 14, vorzugsweise mit 7 bis 12 C-Atomen. Dabei gilt zu beachten, daß Monoetherverbindungen mit aliphatischen, verzweigten Kohlenwasserstoffresten einen niedrigeren Festpunkt und dafür aber auch einen niederen Siedepunkt aufweisen als unverzweigte, aliphatische Kohlenwasserstoffreste. Ganz besonders bevorzugt werden aliphatische, unverzweigte Kohlenwasserstoffreste mit 8 bis 10 C-Atomen. Beispiele für diese Gruppe an Monoetherverbindungen sind: Di-n-octyl-ether, n-Octyl-n-Nonylether, Di-n-decylether, Di-n-nonylether sowie Mischungen derselben. Insbesondere bevorzugt werden von diesen Monoetherverbindungen solche, deren gleiche oder verschiedene Kohlenwasserstoffreste eine gerade Anzahl an C-Atomen haben.

Bei Mischungen von Monoetherverbindungen ist es aufgrund der biologischen Abbaubarkeit und Rheologie sinnvoll, Monoetherverbindungen mit aliphatischen, unverzweigten Kohlenwasserstoffresten mit 6 bis 14, vorzugsweise mit 7 bis 12 und insbesondere mit 8 bis 10 C-Atomen, in Mengen über 30 Gew.-%, vorzugsweise über 50 bis 100 Gew.-% - bezogen auf Etherverbindungen der Ölphase - miteinzusetzen.

Die erfindungsgemäßen Emulsionen enthalten in der Ölphase wenigstens anteilsweise Monoetherverbindungen, wobei deren über den Ethersauerstoff gebundene Kohlenwasserstoffreste wenigstens 5 C-Atome aufweisen. Bevorzugt sind diese speziellen Monoetherverbindungen in Mengen über 10 Gew.-%, vorzugsweise in dem Bereich von 30 bis 100 Gew.-% und insbesondere über 45 Gew.-% - bezogen auf Ölphase - enthalten. Als weitere Bestandteile der Ölphase kommen solche hydrophoben Verbindungen in Betracht, die mit den speziellen Monoetherverbindungen in jedem beliebigen Verhältnis mischbar bzw. löslich sind und in Abmischung die prinzipiellen Anforderungen an die Ölphase erfüllen. Bevorzugt werden hydrophobe Verbindungen aus der Gruppe der Kohlensäurediester, Fette, Öle, Fettsäuremonoester wie Isohexadecylstearat und Isotridecylstearat, Dicarbonsäureester und/oder Kohlenwasserstoffe wie Toluol, Perchlorethylen und ähnliches, die insgesamt dem Fachmann als Ölphase aus dem Stand der Technik (vgl. DE-B-10 89 173, DE-A-21 54 081 und EP-C-208 217) bekannt und in jedem beliebigen Verhältnis mit den speziellen Monoetherverbindungen mischbar bzw. löslich sind. Von den Kohlensäurediester werden bevorzugt solche von niedrigen aliphatischen Alkoholen mit 1 bis 22 C-Atomen als hydrophobe Verbindung eingesetzt. Kohlensäurediester sind handelsübliche Produkte und herstellbar nach den in Ullmann's Encyklopädie der technischen Chemie, 4. Auflage (1977), Band 14, Verlag Chemie, Weinheim, Seiten 591-593 genannten Verfahren. Unter Berücksichtigung der biologischen Abbaubarkeit sind ganz besonders Fette, Öle, Fettsäuremonoester, Kohlensäurediester und/oder Dicarbonsäureester als weitere hydrophobe Bestandteile der Ölphase geeignet. Die hydrophoben Verbindungen können in Mengen von 0 bis 90 Gew.-%, vorzugsweise bis 70 Gew.-% und insbesondere bis 55 Gew.-% - bezogen auf Ölphase - enthalten sein. Werden Fettsäuremonoester als hydrophobe Verbindung in der Ölphase gewünscht, so ist in diesem Fall darauf zu achten, daß sie lediglich in Mengen bis 50 Gew.-%, vorzugsweise bis 20 Gew.-% - bezogen auf Ölphase - neben den Monoetherverbindungen und gegebenenfalls weiteren hydrophoben Verbindungen - enthalten sind. Werden Kohlensäurediester als hydrophobe Verbindung in der Ölphase gewünscht, so ist in diesem Fall darauf zu achten, daß sie lediglich in Mengen bis 75 Gew.-%, vorzugsweise bis 50 Gew.-% - bezogen auf die Ölphase - enthalten sind. In einigen Fällen können in der Ölphase auch Monoetherverbindungen enthalten sein, die für sich genommen die Kriterien der Wasserlöslichkeit, Festpunkt und Siedepunkt nicht erfüllen. In diesen Fällen ist es jedoch notwendige, daß derartige Monoetherverbindungen in Mischung mit den im Rahmen der Erfindung bevorzugten Monoetherverbindungen und gegebenenfalls mit den weiteren hydrophoben Verbindungen den Anforderungen an die Ölphase gerecht werden.

Die erfindungsgemäßen Wasser-in-Öl-Emulsionen enthalten in Wasser lösliche oder in Wasser quellbare Emulsionspolymerisate. Im Sinne der Erfindung werden unter Emulsionspolymerisate Homopolymere oder Copolymere verstanden, die durch Polymersation von ethylenisch ungesättigten Monomeren in Emulsion hergestellt werden, wobei die Monomeren zumindest anteilsweise in Wasser löslich sind und und die wäßrige Phase in der oben beschriebenen Ölphase dispergiert ist. Bevorzugt werden Monomere, die mindestens in Mengen über 10 Gew.-% - bezogen auf wäßrige Phase - löslich sind. Geeignete ethylenisch ungesättigte Monomere für die Homo- oder Copolymere der erfindungsgemäßen Emulsionen sind in der Technik allgemein bekannt und werden in zahlreichen Publikationen und Patentschriften wie in den als Stand der Technik zitierten Patent(anmeldung)en und beispielsweise in der DE-B-25 37 586, DE-A-28 40 894, DE-A-25 38 281, DE-A-29 24 663 und DE-A-24 46 584 beschrieben. Die ethylenisch ungesättigten Monomere verfügen über mindestens eine Doppelbindung, können aber auch zwei Doppelbindungen aufweisen, und gegebenenfalls funktionelle Gruppen tragen wie Säuregruppen in freier Form und/oder in

EP 0 557 311 B1

Form ihrer Salze oder wie Aminocarbonsäurereste. Spezielle Beispiele geeigneter Monomerer sind: Methacrylamid und Acrylamid - im folgenden verkürzt auch als (Meth) Acrylamid bezeichnet-, Acrylsäure und Methacrylsäure - im folgenden auch verkürzt als (Meth) Acrylsäure bezeichnet-, Alkali- und/oder Ammoniumsalze der (Meth)Acrylsäure, N-substituierte Amide von (Meth)Acrylamid wie Methyl(meth)acrylamid und/oder Methylenbis(meth)acrylamid, (Meth)Acrylamidoalkansulfonsäuren und/oder deren Salze wie 2-Acrylamido-2-methylpropansulfonsäure, (Meth)Acrylsäureester von Aminoalkohlen wie Dimethylaminoäthyl-(meth)acrylat in neutralisierter und/oder in quaternierter Form, Hydroxyalkyl(meth)acrylate wie Ethylenglykolmono(meth)acrylat und/oder Ethylenglykoldi(meth)acrylat und/oder Oligoethylenglykoldi(meth)-acrylat. Bevorzugt werden ethylenisch ungesättigte Monomere mit einer Doppelbindung. Auch ungesättigte Monomere mit einer und/oder mehreren Doppelbindungen, die nicht der (Meth)Acrylatreihe angehören und gegebenenfalls nur wenig wasserlöslich sind, wie Maleinsäure und/oder deren Anhydrid, Vinylacetat, Vinylsulfonsäure und/oder deren Salze, Acrylnitril, Vinylpyridine, Vinylether, Allylamine, Vinylpyrrolidon, Divinylbenzol und/oder Styrol sind in solchen Mengen als Comonomere einsetzbar, in der sie zusammen mit den wasserlöslichen Monomeren zu wasserlöslichen oder in Wasser quellbaren Emulsionspolymerisaten führen. Über den Anteil an Monomeren, die nur bedingt in Wasser löslich sind, kann die Hydrophobie der erhaltenen Emulsionspolymerisate eingestellt werden. Unter der Maßgabe, daß die erhaltenen Emulsionspolymerisate in Wasser löslich oder in Wasser quellbar sind, kann je nach Hydrophobie des einzelnen Monomeren und gewünschtem Hydrophobierungsgrad der Emulsionspolymerisate der Anteil an hydrophoben Monomeren im Monomerengemisch in weiten Grenzen schwanken. Ganz besonders bevorzugt werden solche Monomere, die über eine Doppelbindung verfügen und in Wasser löslich sind. Von den bereits oben aufgezählten Emulsionspolymerisaten werden in Form ihrer Emulsion für die Verwendung als Flockungsmittel und/oder Sedimentationshilfsmittel bevorzugt Homopolymere oder Copolymere aus - jeweils bezogen auf Gesamtmonomergehalt -

a) 0-100 Gew.-% (Meth) Acrylamid

b) 0-100 Gew.-% ethylenisch ungesättigten Monomeren, die eine Säuregruppe in freier Form und/oder in Form ihrer Salze tragen

c) 0-100 Gew.-% ethylenisch ungesättigten Monomeren, die eine Amingruppe und/oder Ammoniumgruppe tragen,

wobei die Summe der Monomeren 100 Gew.-% ergeben muß. Insbesondere bevorzugt werden Homopolymere von a) bis c) und Copolymere von a) und b) oder von a) und c) mit der Maßgabe, daß die Summe der Monomeren 100 Gew.-% ergeben muß.

Copolymere aus Monomeren der Gruppe a) und b) werden im folgenden auch als anionisch modifizierte Poly(meth)acrylamide und Copolymere aus Monomeren der Gruppe a) und c) als kationisch modifizierte Poly(meth)acrylamide bezeichnet. Besonders geeignete Monomere der Gruppe b) sind: (Meth) Acrylsäure, Alkali- und/oder Ammoniumsalze der (Meth) Acrylsäure und/oder (Meth) Acrylamidoalkansulfonsäuren und/oder deren Salze. Besonders geeignete Monomere der Gruppe c) sind: N-substituierte Amide von (Meth) Acrylamid und/oder (Meth) Acrylsäureester von Aminoalkoholen in neutralisierter und/oder in quaternierter Form.

Einer weiteren Ausführungsform der vorliegenden Erfindung entsprechend können die Emulsionspolymerisate bis zu 50 Gew.-% - bezogen auf Gesamtmonomergehalt - Monomere mit nicht-ionischen funktionellen

Gruppen einpolymerisiert enthalten, sofern in den Emulsionspolymerisaten Monomere der Gruppe b) oder c) miteinpolymerisiert sind. Unter den

Monomeren mit nicht-ionischen funktionellen Gruppen sind bevorzugte Monomere Vinylacetat, Vinylalkohol, Hydroxyalkyl(meth)acrylate wie Ethylenglykol(meth)acrylat und/oder Oligoethylenglykoldi(meth)acrylat.

Ganz besonders bevorzugt für die Verwendung als Flockungsmittel und/oder Sedimentationhilfsmittel werden als Emulsionspolymerisate kationisch und/oder anionisch modifizierte Poly(meth)acrylamide, die in Mengen von 20 bis 85 Gew.-% (Meth) Acrylamid - bezogen auf Gesamtmonomerengehalt- einpolymerisiert enthalten.

Des weiteren können im Sinne der Erfindung Emulsionspolymerisate analog der DE-A-25 38 281 eingesetzt werden, die zu 99,99 bis 95 Gew.% eines kationisch modifizierten Polyacrylamids und zu 0,01 bis 5 Gew.% eines anionisch modifizierten Polyacrylamids oder zu 99,99 bis 95 Gew.% eines anionisch modifizierten Polyacrylamids und zu 0,01 bis 5 Gew.% eines kationisch modifizierten Polyacrylamids - jeweils bezogen auf die Gesamtpolymermenge - enthalten.

Für die Verwendung als Verdickungsmittel werden aus der Gruppe der bereits allgemein beschriebenen Emulsionspolymerisate bevorzugt Homopolymere und Copolymere aus (Meth) Acrylamid und/oder (Meth)-Acrylsäure, die gegebenenfalls bis zu 50 Gew.-% - bezogen auf Geamtmonomerengehalt - der Monomere der Gruppe b), c) und/oder Monomere mit nichtionischen funktionellen Gruppen einpolymerisiert enthalten

4

können. Vorzugsweise werden als Verdickungsmittel in Form ihrer Emulsionen Copolymerisate von (Meth) Acrylsäure und Acrylamid verwendet.

Die erfindungsgemäßen Wasser-in-Öl-Emulsionen enthalten in Wasser lösliche oder in Wasser quellbare Emulsionspolymerisate möglichst in hohen Mengen, vorzugsweise in dem Bereich von 20 bis 60 Gew.% und insbesondere von 30 bis 50 Gew.- bezogen auf Emulsion. Um diese Mengen an Emulsionspolymerisat in der Wasserphase zu erreichen, sind die dem Fachmann geläufigen Mengen an Monomeren einzusetzen. Wenn gewünscht, kann der Fachmann auch nach den benannten Verfahren, wie nach der DE-A-32 24 994 oder DE-A-35 22 419, die Emulsion aufkonzentrieren, um möglichst hohe Mengen an Emulsionspolymerisaten zu erhalten. Im Sinne der Erfindung werden hochmolekulare Emulsionspolymerisate mit einem Molekulargewicht in dem Bereich von 50.000 bis 25.000.000, vorzugsweise von 500.000 bis 10.000.000 und insbesondere von 1.000.000 bis 5.000.000 bevorzugt. Zweckmäßigerweise liegen die erfindungsgemäßen Emulsionspolymerisate in feiner Verteilung in der wäßrigen Phase vor und zeigen eine Teilchengröße von 50 $\mu$m bis 1 $\mu$m.

Für die Dispergierung der wäßrigen Monomerlösung in der kontinuierlichen Ölphase sowie zur Stabilisierung der erfindungsgemäßen Wasser-in-Öl-Emulsion werden Dispergiermittel bzw. Emulgatoren vom Typ Wasser-in-Öl eingesetzt. Geeignete Wasser-in-Öl-Emulgatoren zeigen nach J.T. Davies (das Atlas-HLB-System,Atlas Chemie GmbH,EC1OG Juli 1971; HLB-System, Römpps Chemie-Lexikon, 8. Aufl. S.1715, Frankh'sche Verlagshandlung Stuttgart) einen HLB-Wert von 1 bis 10, vorzugsweise von 2 bis 8. Beispiele für polymere Emulgatoren sind der DE-C-24 12 266, Beispiele für lipophile Emulgatoren der US 3 624 019 zu entnehmen. Bevorzugte Emulgatoren sind Hexadecylnatriumphthalat, Sorbitanmonostearat, Cetylstearylnatriumphthalat, Mischungen von Ölsäuremonoglycerid und Ölsäurediglycerid mit einem Anteil von Ölsäuremonoglycerid im Bereich von 40 bis 60 Gew.%, Mischungen von ethoxyliertem Oleylalkohol und ethoxyliertem Cetylalkohol mit einem statistischen Ethoxylierungsgrad von etwa 2 und/oder insbesondere Sorbitanoleat. Die erfindungsgemäßen Emulsionen enthalten die Emulgatoren in Mengen von 0,1 bis 30 Gew.%, vorzugsweise von 1 bis 15 Gew.% - bezogen auf Gesamtemulsion- in der Ölphase.

Ein weiterer Gegenstand der Erfindung betrifft ein Verfahren zur Herstellung von in Wasser gelösten oder in Wasser quellbaren Emulsionspolymerisaten. Nach dem an sich bekannten Mechanismus der inversen Emulsionspolymerisation wird die Polymerisation in Anwesenheit von Wasser-in-Öl-Emulgatoren in einer Wasser-in-Öl-Emulsion durchgeführt, deren in Wasser nicht unbegrenzt mischbare flüssige Ölphase wenigstens anteilsweise Monoetherverbindungen enthält, wobei die Monoetherverbindungen zwei gleiche oder verschiedene über den Ethersauerstoff gebundene Kohlenwasserstoffreste mit wenigstens 5 C-Atomen tragen. Analog der DE-B-10 89 173 werden die bereits beschriebenen ethylenisch ungesättigten Monomere in Wasser gelöst bzw. dispergiert und mit Hilfe der bereits beschriebenen Emulgatoren in der erfindungsgemäßen Ölphase, die wenigstens anteilsweise die speziellen Monoetherverbindungen enthält, emulgiert. Dabei kann das Verhältnis der wäßrigen, Monomere enthaltenden Phase zu der Monoetherverbindungen enthaltenden Ölphase innerhalb weiter Grenzen schwanken. Bevorzugt wird ein Gewichtsverhältnis von wäßriger, Monomere enthaltender Phase zur Monoetherverbindung enthaltenden Ölphase von 40 : 60 bis 90 : 10. Unter Zusatz von freie Radikalen bildenden Initiatoren wird die Emulsionspolymerisation der ethylenisch ungesättigten Monomere zu einem in Wasser löslichen oder in Wasser quellbarem Emulsionspolymerisat ausgelöst. Als freie Radikale bildende Initiatoren können die dem Fachmann bekannten Peroxid-, Persulfatverbindungen und/oder Azoverbindungen wie Azodiisobutronitril, Benzoylperoxid, Lauroylperoxid und/oder Kaliumpersulfat je nach ihrer Löslichkeit der Ölphase oder der Wasserphase zugesetzt werden, gegebenenfalls mit zusätzlichen Redoxkomponenten wie Eisen-II-Salze, Derivate der schwefligen Säure, Ascorbinsäure und/oder Natriumformaldehydsulfoxylathydrat. Zur Emulsionspolymerisation werden möglichst geringe Mengen an Initiatoren, vorzugsweise in dem Bereich von 0,001 bis 2 Gew.%, und insbesondere in dem Bereich von 0,002 bis 0,2 Gew.%- bezogen auf Gesamtemulsionder Ölphase oder der Wasserphase zugesetzt. Vorzugsweise wird die Monomere enthaltende wäßrige Phase unter Rühren zu den Monoetherverbindungen und Emulgatoren enthaltende Ölphase zugesetzt. Je nach Charakter der eingesetzten Monomeren wird die Polymerisation gegebenenfalls durch Erwärmen des Reaktionsansatzes beschleunigt. Bevorzugt werden Polymerisationstemperaturen in dem Bereich von 20 bis 100 ° C, vorzugsweise von 30 bis 90 ° C. Nach dem beschriebenen Verfahren werden Emulsionen erhalten, deren Emulsionspolymerisate zumindest gleich hohe Molekulargewichte aufweisen wie die, deren Ölphase ausschließlich aus schwer abbaubaren Kohlenwasserstoffen vom Typ Toluol und analogem besteht.

Die erfindungsgemäßen Wasser-in-Öl-Emulsionen werden vor ihrer Verwendung invertiert, d.h. durch Vergrößern der inneren, Emulsionspolymerisate enthaltenden wäßrigen Phase und unter Anwendung geeigneter Maßnahmen tritt eine Phasenumkehr ein. Dabei wird das in Wasser gelöste oder in Wasser gequollene Emulsionspolymerisat sehr viel schneller in Wasser freigesetzt als wenn man das feste Polymerisat in Wasser lösen oder quellen würde. Gleichzeitig wird dabei die ehemals äußere Ölphase nach dem Invertieren zur neuen inneren Phase. Nach dem Invertieren liegt die Monoetherverbindungen enthaltende Ölphase in verhältnismäßig kleinen Mengen und in Form von kleinen Tröpfchen emulgiert in Wasser vor. Aufgrund des in Wasser gelösten (Luft)Sauerstoffs kommt die Monoetherverbindungen enthaltende Ölphase somit über die Wasserphase direkt in Kontakt mit (Luft) Sauerstoff, so daß ein aerober Abbau der Monoetherverbindungen enthaltenden Ölphase zu diskutieren ist. Der Vorteil der erfindungsgemäßen Emulsionen liegt unter anderem darin, daß nach der Invertierung der aerobe Abbau der speziellen Monoetherverbindungen einzusetzen vermag. Damit sind die erfindungsgemäßen Emulsionen insgesamt vor allem aerob sehr viel besser biologisch abbaubar als die bisherigen Emulsionen mit Kohlenwasserstoffen wie Toluol und ähnliches in der Ölphase. Geeignete Maßnahmen zum Invertieren beschreibt beispielsweise die DE-A-21 54 081. Nach der bequemsten Maßnahme wird Netzmittel, gegebenenfalls unter gleichzeitigem Zusatz an Wasser, zu der erfindungsgemäßen Wasser-in-Öl-Emulsion gegeben. Vorzugsweise wird das Netzmittel zunächst zu einem Teil des Wassers gegeben, bevor damit die erfindungsgemäße Emulsion versetzt wird. Gegebenenfalls kann anschließend zur Vergrößerung der wäßrigen Phase nochmals Wasser zugegeben werden. In einer weiteren Ausführungsform wird das Netzmittel direkt zu der erfindungsgemäßen Emulsion gegeben, vorzugsweise wird das Netzmittel in die hydrophoben Mischungen der erfindungsgemäßen Ölphase gelöst beziehungsweise dispergiert und in die Emulsion eingerührt. Die eigentliche Invertierung erfolgt dann erst vor Gebrauch durch Zugabe von Wasser, wobei es in der Regel unerheblich ist, ob Wasser zu der Emulsion oder die Emulsion zu Wasser gegeben wird. Die Einsatzmenge an zugesetztem Netzmittel schwankt je nach Art des Netzmittels und der beschriebenen Invertierung. Es können erhebliche Über- und Unterschüsse zugegeben werden. In der Regel werden zur Invertierung 0,01 bis 50 Gew.%, vorzugsweise 0,5 bis 20 Gew.%, und insbesondere 1 bis 20 Gew.% an Netzmittel- bezogen auf Emulsionspolymerisat- zugesetzt. Zweckmäßigerweise werden hydrophile, wasserlösliche Netzmittel, die kationisch, anionisch oder nichtionisch sein können, eingesetzt. Dabei werden gewöhnlich für die Invertierung von Emulsionen, die das Netzmittel schon in der Emulsion enthalten, Mengen des unteren angegebenen Bereiches bevorzugt. Beispiele für die genannten Arten von Netzmitteln gibt die DE-A-21 54 081. Von diesen sind besonders bevorzugt nichtionische Tenside wie Ethoxylierungsprodukte von Nonylphenol und/oder von höheren, gesättigten und/oder ungesättigten Fettalkoholen mit 12 bis 18 C-Atomen wie die Reaktionsprodukte von Oleylalkohol mit 2 bis 20 Ethylenoxideinheiten.

Andere geeignete Maßnahmen zum Invertieren der erfindungsgemäßen Emulsionen sind beispielsweise Zugabe von bestimmten Elektrolyten, pH-Verschiebungen mit jeder Art von Säuren, Anlegen elektrischer Hochspannungsfelder und/ oder Einwirkung von Scherkräften.

Ein weiterer Gegenstand der vorliegenden Erfindung ist die Verwendung der erfindungsgemäßen Emulsionen, die nach oben beschriebener Art vorher invertiert werden. Im Sinne der Erfindung können die invertierten Emulsionen überall dort verwendet werden, wo in einer Dispersion dispergiert vorliegende Kolloide und Feststoffe zu größeren Gebilden vereinigt und quanitativ aus der flüssigen Dispergierphase abgetrennt werden sollen. Zudem können die erfindungsgemäßen, invertierten Emulsionen verwendet werden, wenn in Flüssigkeit (Wasser) vorliegende Feststoffteilchen entwässert werden sollen. Im allgemeinen Sinne können die invertierten Wasser-in-Öl-Emulsionen von in Wasser gelösten oder in Wasser quellbaren Emulsionspolymerisaten auf Basis von Polyacrylamiden in einer mit Wasser nicht unbegrenzt mischbaren flüssigen Ölphase, die wenigstens anteilsweise Monoetherverbindungen enthält und wobei die Monoetherverbindungen zwei gleiche oder verschiedene über den Ethersauerstoff gebundene Kohlenwasserstoffreste mit wenigstens 5 und höchstens 24 C-Atomen tragen, als Verdickungsmittel und/oder als Flockungs- und/oder Sedimentationshilfsmittel.

Invertierte Emulsionen mit kationisch modifizierten Poly(meth)acrylamiden können als Flockungs- und/oder Sedimentationshilfsmittel beispielsweise bei der Aufbereitung von Rohwasser zu Betriebswasser, der Reinigung von Phosphorsäure beim schwefelsauren Phosphataufschluß, der Klärung von Ilmenitaufschlußlösung, der Sodaherstellung sowie der Abwasserreinigung und/ oder Schlammentwässerung verwendet werden. Die Rolle der Flockungsmittel in den genannten Beispielen beschreibt J.Reuter (Chemiker-Zeitung, 98. Jahrgang (1974) Nr.5, S.222 bis 227). Die erfindungsgemäßen, anionisch modifizierten Poly-(meth)acrylamide können beispielsweise als Flockungsmittel bei der Aufbereitung von Prozeß- und Abwasser im Bergbau verwendet werden. Als Flockungs- und/oder Sedimentationshilfsmittel werden die erfindungsgemäßen, invertierten Emulsionen in stark mit Wasser verdünnter Form verwendet. Vorzugsweise werden invertierte Emulsionen verwendet, die maximal 1 Gew.%, bevorzugt maximal 0,1 Gew.% an Polymerisat- bezogen auf invertierte Emulsion- enthalten. Invertierte Emulsionen auf Basis von Emulsionspolymerisaten von hohen Molekulargewichten können in noch größerer Verdünnung, vorzugsweise bis maximal 0,05 Gew.%- bezogen auf invertierte Emulsion- verwendet werden.

Ein weiterer Verwendungszweck liegt in der Verdickungswirkung der erfindungsgemäßen, invertierten Emulsionen. So können beispielsweise polymere Dispersionen von Klebstoffen oder Beschichtungsmittel sowie Druckfarben, Anstrichmittel und/oder kosmetische Zubereitungen mit den invertierten Emulsionen verdickt werden. Je nach vorhandenem Emulsionspolymerisat kann Verdickungswirkung im sauren, im alkalischen oder im gesamtem pH-Bereich erzielt werden. Emulsionen, die in dem Emulsionspolymerisat über freie Säuregruppen verfügen, können durch Zugabe von Basen innerhalb kürzester Zeit auf den gewünschten Viskositätswert eingestellt werden. Emulsionen, die in dem Emulsionspolymerisat Aminoalkylester der (Meth)Acrylsäure einpolymerisiert enthalten, können durch Zugabe verschiedener Säuremengen entsprechend viskos eingestellt werden. Eine von dem pH-Wert unabhängige Verdickungswirkung kann man bei Emulsionen erhalten, die Einheiten von quaternierten Alkylestern polymerisierbarer Carbonsäuren einpolymerisiert enthalten. Gute Verdickungswirkung zeigen auch die erfindungsgemäßen, invertierten Emulsionen mit Emulsionspolymerisaten, die in Wasser nur bedingt lösliche Comonomere wie Styrol einpolymerisiert enthalten. Als Verdickungsmittel werden die erfindungsgemäßen Emulsionen gerne in einer solchen Konzentration verwendet, daß 5 bis 20 gew.%ige Polymerlösungen resultieren. In einigen Anwendungsbereichen können auch niedere Gehalte an Emulsionspolymerisaten in den erfindungsgemäßen, invertierten Emulsionen bevorzugt werden. So werden beispielsweise zur Verdickung von wäßrigen Lösungen von Tapetenkleistern eher niedrigere Gehalte als 5 Gew.%, vorzugsweise im Bereich von 0,1 bis 1 Gew.%- berechnet als Emulsionspolymerisat und bezogen auf fertige Anwendungs lösung- an Emulsionspolymerisaten in den Emulsionen bevorzugt.

## Beispiele

### Beispiel 1:

In einem 1 l Reaktionsgefäß mit Flügelrührer, Rückflußkühler, Thermometer, Kühl- und Heizmöglichkeit wurden 102,9 g Di-n-octylether und 13,1 g Sorbitanmonooleat (Span 80 [(R)]; Atlas) vorgelegt. Nach Zusatz einer Mischung aus 92,0 g Acrylamid, 33,8 g Acrylsäure, 169 g demineralisiertes Wasser, 36,9 g 30 %iger NaOH sowie 0,66 g einer 1 %igen wäßrigen Lösung von Ammoniumperoxiddisulfat wurde 10 min. bei 1000 Umdrehungen/pro min. (UpM) gerührt. Anschließend wurde die Rührgeschwindigkeit auf 500 UpM reduziert, und das System 3 x mit der Wasserstrahlpumpe evakuiert und anschließend mit Stickstoff belüftet. Daraufhin wurde der Reaktionsansatz auf 35°C erwärmt. Nach Zugabe von 0,33 g 1%iger wäßriger Ascorbinsäure lösung wurde die Rührgeschwindigkeit für 2 min. auf 1000 UpM angehoben. Durch Außenkühlung wurde gegebenenfalls dafür gesorgt, daß die Innentemperatur nicht wesentlich über 50°C stieg. Nach Abklingen der Wärmeentwicklung ließ man den Ansatz 30 min. bei 75°C nachreagieren. Nach Abkühlung auf Raumtemperatur wurde in den Reaktionsansatz bei einer Rührtemperatur von 500 bis 100 UpM eine Mischung von 17,3 g Di-n-octylether und 11,2 g Kokosalkohol mit 9 EO (Dehydol 100[R]; Henkel) eingerührt. Angaben zum Modifizierungsgrad, der spezifischen Viskosität und den Flockungseigenschaften sind der Tabelle 1 zu entnehmen.

### Beispiel 2:

Analog Beispiel 1 wurden 135 g Di-n-decylether, 11,2 g einer Mischung von Oleyl- und Cetylalkohol, ethoxyliert mit 2 EO (Eumulgin O2[(R)];Henkel) und 3,8 g einer Mischung von Glycerinmonooleat und Glycerindioleat (Atmos 300[(R)]; Atlas) vorgelegt und dazu eine Mischung aus 114 g Acrylamid, 51,6 g Dimethylaminoethylmethacrylat, 12 g Adipinsäure, 203 g demineralisiertes Wasser, 46 g einer 30%igen $H_2SO_4$ sowie 3,6 g einer 1%igen wäßrigen Lösung von Tertiärbutylhydroperoxid gegeben. Nach Rühren, Erwärmen, Evakuieren und Belüftung mit Stickstoff analog Beispiel 1 wurden 4,7 g einer 1%igen wäßrigen Natriumformaldehydsulfoxylathydratlösung zugesetzt, gerührt und polymerisiert. Der Modifizierungsgrad dieser nicht selbstinventierenden Emulsion und deren spezifische Viskosität sind Tabelle 1 zu entnehmen.

### Beispiel 3:

Analog Beispiel 1 wurden 141g Di-n-octylether und 18g Span 80 vorgelegt und dazu eine Mischung aus 90g Acrylamid, 205,3g demineralisiertes Wasser, 68,7g Dimethylaminomethylmethacrylat, 71g einer 30%igen Schwefelsäure sowie 1,8g einer 1%igen wäßrigen Tertiärbutylhydroperoxidlösung zugegeben. Analog Beispiel 1 wurde gerührt, erwärmt, evakuiert und mit Stickstoff gelüftet. Anschließend wurden 2,4g einer 1%igen wäßrigen Natriumformaldehydsulfoxylathydratlösung zugegeben und polymerisiert. Nach Abkühlung auf Raumtemperatur wurde zu der Emulsion eine Mischung von 23g Di-n-octylether und 15g Kokosalkohol mit 9 EO analog Beispiel 1 eingerührt. Der Modifizierungsgrad dieser selbstinvertierenden Emulsion, deren spezifische Viskositäten und deren Flockungseigenschaften sind in Tabelle 1 aufgeführt.

7

**Beispiel 4:**

Analog Beispiel 1 wurden 141g Di-n-octylether und 18g Span 80[R] vorgelegt und dazu eine Mischung aus 90g Acrylamid, 68,7g Dimethylaminoethylmethacrylat, 205,3g demineralisiertes Wasser, 71g einer 30%igen $H_2SO_4$ und 1,8g einer 1%igen wäßrigen Ammoniumperoxidisulfatlösung gegeben. Analog Beispiel 1 wurde gerührt, evakuiert, mit Stickstoff belüftet und erwärmt. Nach Zusatz von 0,9g einer 1%igen wäßrigen Ascorbinsäurelösung wurde analog Beispiel 1 polymerisiert. Der Modifizierungsgrad und die spezifische Viskosität dieser nicht selbstinvertierenden Lösungen sind in Tabelle 1 aufgeführt.

**Beispiel 5:**

Analog Beispiel 1 wurden 112,8 Di-n-octylether, 28,2g Stearinsäureisohexadecylester (Rilanit IHS[R]; Henkel) und 18g Span 80[R] vorgelegt und dazu eine Mischung aus 90g Acrylamid, 68,7g Dimethylaminoethylmethacrylat, 205,3 demineralisiertes Wasser, 71g 30%ige Schwefelsäure sowie 1,8g einer 1%igen wäßrigen Ammoniumperoxiddisulfatlösung gegeben. Analog Beispiel 1 wurde gerührt, evakuiert, mit Stickstoff belüftet und erwärmt. Anschließend wurden 0,9g einer 1%igen wäßrigen Ascorbinsäurelösung zugegeben und analog Beispiel 1 polymerisiert. Der Modifzierungsgrad und die spezifische Viskosität dieser nicht selbstinvertierenden Emulsion sind in Tabelle 1 zusammengefaßt.

**Beispiel 6:**

Analog Beispiel 1 wurden 70,5g Di-n-octylether, 70,5g Isotridecylcarbonat sowie 18g Span 80[R] vorgelegt und dazu eine Mischung aus 126 g Arcylamid, 227g demineralisiertes Wasser, 41,2g Dimethylaminoethylmethacrylat, 42,8g einer 30 %igen $H_2SO_4$ sowie 1,8g einer 1 %igen wäßrigen Lösung von Tertiärbutylhydroperoxid-Lösung gegeben. Nach Rühren, Erwärmen, Evakuieren und Belüftung mit Stickstoff analog Beispiel 1 wurden 2,4g einer 1 %igen wäßrigen Natriumformaldehydsulfoxylathydrat-Lösung zugesetzt, gerührt und polymerisiert.

Der Modifizierungsgrad dieser nicht selbstinvertierenden Emulsion, deren spezifische Viskositäten und deren Flockungseigenschaften sind in Tabelle 1 aufgeführt.

**Beispiel 7:**

Analog Beispiel 6 wurde eine Wasser-in-Öl-Emulsion hergestellt, jedoch mit dem Unterschied, daß nach Abkühlung auf Raumtemperatur zu der Emulsion eine Mischung von 27,7g Di-n-octylether und 18g Dehydol 100[R]; Henkel, eingerührt wurde. Der Modifizierungsgrad dieser selbstinvertierenden Emulsion, deren spezifische Viskositäten und deren Flockungseigenschaften sind in Tabelle 1 aufgeführt.

**Vergleichsversuch 1:**

Analog Beispiel 5 wurde eine Öl-in-Wasser-Emulsion hergestellt. Einziger Unterschied dabei war, daß die Ölphase nun nicht aus einer Mischung von Fettsäureestern und Ethern eingesetzt wurden, sondern daß ausnahmslos und zwar 141g Stearinsäureisohexadecylester verwendet wurde.

**Vergleichsversuch 2:**

Analog Beispiel 5 wurde eine Öl-in-Wasser-Emulsion hergestellt. Anstelle einer Mischung von Fettsäureester und Ether wurde lediglich 141g eines Dicarbonsäureesters und zwar Di-2-ethylhexyladiapat (Vestinol OA[R]; Hüls) eingesetzt.

**Bestimmung der spezifischen Viskosität:**

A) 5 g der selbstinvertierenden Wasser-in-Öl-Emulsionen nach Beispielen 1, 3 und 7 wurden zu 750ml demineralisierten Wasser unter Rühren zingesetzt. Zur Homogenisierung wurde eine weitere Stunde gerührt. Man erhielt eine 0,2 Gew.-%ige Polymerlösung. Diese Polymerlösung wurde mit äquivalenten Volumenmengen einer 2 normalen wäßrigen Natriumnitratlösung abgemischt. Die Mischung wurde durch einen Faltenfilter Nr. 597 filtert. Anschließend wurde die spezifische Lösungsviskosität in einem KPG-Viskosimeter nach Ostwald (Schott, Kennfarbe grün, Best.-Nr. 2450905) bei 20 °C bestimmt.

B) Im Fall der nicht selbstinvertierenden Wasser-in-Öl-Polymerdispersionen nach Beispiel 2, 4, 5 und 6 wurden jeweils 5 g Emulsion einer mit einem Magnetrührer gut durchmischten Vorlage von 750 ml einer 0,4 Gew.-%igen wäßrigen Lösung von Kokosalkohol mit 9 EO zugesetzt. Die Homogenisierung, Abmischung, Filtration und Bestimmung der spezifischen Lösungsviskosität erfolgte wie oben beschrieben.

**Bestimmung der Flockungswirkung**

C) W/O-Emulsion mit kationisch modifizierten Emulsionspolymerisaten.

Die W/O-Emulsion nach Beispiel 2, 3, 4, 5, 6 und 7 wurde wie unter A) beschrieben mit Wasser zu einer 0,2 Gew.-%igen Lösung verdünnt und mit einer gleichgroßen Wassermenge versetzt. 15 ml dieser 1 : 1 - Mischung wurden zu 100 ml Faulschlamm - tagesfrisch aus einer Kommunalen Kläranlage; Trockenrückstand 2 bis 4 Gew.-% - zudosiert. Nach mehrmaligem Umschütten wurde die Mischung über einen Rundfilter Nr. 598 abgenutscht (5 min.). Zunächst wurde der Filterkuchen sofort ausgewogen und anschließend nach einem 16-stündigen Trocknen bei 105°C erneut ausgewogen. Bestimmt wurde der Trockensubstanzgehalt (TS) im Filterkuchen. Die Höhe des TS-Gehaltes (%) wird als Maß für die Entwässerungswirkung herangezogen. Im Handel befindliche Flockungsmittel und deren Flockungseigenschaften werden im Vergleich in Tabelle 1 angegeben.

B) Anionisch modifizierte Polymere

6,8g Natriumchlorid und 6 g gepulverte Aktivkohle wurden in 1 l demineralisiertes Wasser gegeben und 1 h mit einem Flügelrührer gerührt. 500 ml der so hergestellten Aktivkohlesuspension wurden in ein Trübungsmeßgerät gegeben. Unter Rühren mit 500 UpM wurden 0,25 ml einer 1 : 1 Mischung von 0,2 Gew.-%igen Polymerlösung mit Wasser zugegeben. Es wurde 2 min. weitergerührt. Nach Abstellen des Rühres wurden 5 min. der Trübungsverlauf im unteren Gefäßbereich gemessen. Das prozentuale Verhältnis von Resttrübung zur Anfangstrübung ist das Maß für die Flockungswirkung. Ein im Handel befindliches anionisch modifiziertes Flockungsmittel wird in Tabelle 1 als Vergleichssubstanz wiedergegeben.

## Tabelle 1

| Beispiel | Modifizierung | Modifizierungs-grad % | spezifische Viskosität | TS - Gehalt (in %) |
|---|---|---|---|---|
| 1 | anionisch | 30 | 2,42 | 8,2 |
| 2 | kationisch | 36 | 0,63 | nicht bestimmt |
| 3 | kationisch | 50 | 1,44 | 12,1 |
| 4 | kationisch | 50 | 1,26 | nicht bestimmt |
| 5 | kationisch | 50 | 1,03 | nicht bestimmt |
| 6 | kationisch | 30 | 1,64 | 13,3 |
| 7 | kationisch | 30 | 1,40 | 11,0 |
| vgl. 1 | kationisch | 50 | Ansatz vergelt | nicht bestimmbar |
| vgl. 2 | kationisch | 50 | Ansatz vergelt | nicht bestimmbar |
| P3-ferrocryl 8723[R] Henkel Acrylamid mit 35-42 Gew.-% Acrylsäure | anionisch | 35 - 42 | 1,48 | 7,0 |
| P3-ferrocryl 8766[R] Henkel Acrylamid mit 50 Gew.-% Dimethylamino-ethylmethacrylat | kationisch | 50 | 0,96 | 13,5 |

**Patentansprüche**

1. Wasser-in-Öl-Emulsionen von in Wasser gelösten und/oder in Wasser quellbaren Emulsionspolymerisaten in einer in Wasser nicht unbegrenzt mischbaren flüssigen Ölphase in Anwesenheit von Wasser-in-Öl-Emulgatoren, dadurch gekennzeichnet, daß die Ölphase wenigstens anteilsweise Monoetherverbindungen enthält, wobei die Monoetherverbindungen zwei gleiche oder verschiedene über den Ethersauerstoff gebundene Kohlenwasserstoffreste mit wenigstens 5 C-Atomen tragen.

2. Emulsionen nach Anspruch 1, dadurch gekennzeichnet, daß die Ölphase Monoetherverbindungen mit gleichen oder verschiedenen, aliphatischen, cyclischen und/oder aromatischen, gesättigten und/oder ungesättigten Kohlenwasserstoffresten mit 5 bis 24 C-Atomen, vorzugsweise bis 18 C-Atomen enthält, und wobei die Kohlenwasserstoffreste der Etherverbindungen mit inerten Gruppen substituiert sein können.

3. Emulsionen nach einem der Ansprüche 1 bis 2, dadurch gekennzeichnet, daß die Ölphase Monoetherverbindungen mit gleichen oder verschiedenen aliphatischen, verzweigten oder unverzweigten Kohlenwasserstoffresten mit 6 bis 14 C-Atomen enthält.

4. Emulsionen nach einem der Ansprüche 1 bis 3, dadurch gekennzeichnet, daß die Ölphase Monoetherverbindungen mit gleichen oder verschiedenen aliphatischen, verzweigten oder unverzweigten Kohlenwasserstoffresten mit 7 bis 12 C-Atomen enthält.

5. Emulsionen nach einem der Ansprüche 1 bis 4, dadurch gekennzeichnet, daß die Ölphase Monoetherverbindungen mit unverzweigten aliphatischen Kohlenwasserstoffresten mit 8 bis 10 C-Atomen, enthält.

6. Emulsionen nach einem der Ansprüche 1 bis 5, dadurch gekennzeichnet, daß die Ölphase die Monoetherverbindungen mit aliphatischen unverzweigten Kohlenwasserstoffresten mit 6 bis 14 C-Atomen in Mengen über 30 Gew.%, vorzugsweise über 50 bis 100 Gew.% - bezogen auf Etherverbindungen- enthält.

7. Emulsionen nach einem der Ansprüche 1 bis 6, dadurch gekennzeichnet, daß die Ölphase Monoetherverbindungen in Mengen über 10 Gew.%, vorzugsweise in dem Bereich von 30 bis 100 Gew.% und besonders über 45 Gew.% - bezogen auf Ölphase- enthält.

8. Emulsionen nach einem der Ansprüche 1 bis 7, dadurch gekennzeichnet, daß die Ölphase abgemischt mit den Monoetherverbindungen unbegrenzt damit mischbare organische Komponenten aus der Gruppe der Kohlenwasserstoffe, Fette, Öle, Fettsäuremonoester, Kohlensäurediester und/oder Dicarbonsäureester enthält.

9. Verfahren zur Herstellung von Wasser-in-Öl-Emulsionen von in Wasser gelösten oder in Wasser quellbaren Emulsionspolymerisaten, dadurch gekennzeichnet, daß die Polymerisation in Anwesenheit von Wasser-in-Öl-Emulgatoren in einer Wasser-in-Öl-Emulsion durchgeführt wird, deren in Wasser nicht unbegrenzt mischbare flüssige Ölphase wenigstens anteilsweise Monoetherverbindungen enthält, wobei die Monoetherverbindungen zwei gleiche oder verschiedene über den Ethersauerstoff gebundene Kohlenwasserstoffreste mit wenigstens 5 C-Atomen tragen.

10. Verwendung von invertierten Wasser-in-Öl-Emulsionen von in Wasser gelösten oder in Wasser quellbaren Emulsionspolymerisaten auf Basis von Polyacrylamiden in einer mit Wasser nicht unbegrenzt mischbaren flüssigen Ölphase, die wenigstens anteilsweise Monoetherverbindungen enthält und wobei die Monoetherverbindungen zwei gleiche oder verschiedene über den Ethersauerstoff gebundene Kohlenwasserstoffreste mit wenigstens 5 und höchstens 24 C-Atomen tragen, als Verdickungsmittel und/oder als Flockungs- und/oder Sedimentationshilfsmittel.

**Claims**

1. Water-in-oil emulsions of emulsion polymers dissolved in water and/or swellable in water in a liquid oil phase having limited miscibility with water in the presence of water-in-oil emulsifiers, characterized in that the oil phase consists at least partly of monoether compounds, the monoether compounds containing two identical or different at least $C_5$ hydrocarbon radicals linked by the ether oxygen.

2. Emulsions as claimed in claim 1, characterized in that the oil phase contains monoether compounds bearing identical or different, aliphatic, cyclic and/or aromatic, saturated and/or unsaturated $C_{5-24}$ and preferably up to $C_{18}$ hydrocarbon radicals, the hydrocarbon radicals of the ether compounds optionally being substituted by inert groups.

3. Emulsions as claimed in claim 1 or 2, characterized in that the oil phase contains monoether compounds bearing identical or different, aliphatic, branched or unbranched $C_{6-14}$ hydrocarbon radicals.

4. Emulsions as claimed in any of claims 1 to 3, characterized in that the oil phase contains monoether compounds bearing identical or different aliphatic, branched or unbranched $c_{7-12}$ hydrocarbon radicals.

5. Emulsions as claimed in any of claims 1 to 4, characterized in that the oil phase contains monoether compounds bearing unbranched aliphatic $C_{8-10}$ hydrocarbon radicals.

6. Emulsions as claimed in any of claims 1 to 5, characterized in that the oil phase contains the monoether compounds bearing aliphatic unbranched $C_{6-14}$ hydrocarbon radicals in quantities of more than 30% by weight and preferably in quantities of more than 50 to 100% by weight, based on ether compounds.

7. Emulsions as claimed in any of claims 1 to 6, characterized in that the oil phase contains monoether compounds in quantities of more than 10% by weight, preferably in quantities of 30 to 100% by weight and more preferably in quantities of more than 45% by weight, based on oil phase.

8. Emulsions as claimed in any of claims 1 to 7, characterized in that the oil phase contains in admixture with the monoether compounds organic components indefinitely miscible therewith from the group of hydrocarbons, fats, oils, fatty acid monoesters, carbonic acid diesters and/or dicarboxylic acid esters.

9. A process for the production of water-in-oil emulsions of emulsion polymers dissolved in water or swellable in water, characterized in that the polymerization is carried out in the presence of water-in-oil emulsifiers in a water-in-oil emulsion of which the liquid oil phase - showing limited miscibility with water - at least partly contains monoether compounds, the monoether compounds containing two identical or different at least $C_5$ hydrocarbon radicals linked by the ether oxygen.

10. The use of inverted water-in-oil emulsions of emulsion polymers dissolved in water or swellable in water based on polyacrylamides in a liquid oil phase which shows limited miscibility with water and which at least partly contains monoether compounds, the monoether compounds containing two identical or different at least $C_5$ and at most $C_{24}$ hydrocarbon radicals linked by the ether oxygen, as thickeners and/or as flocculation and/or sedimentation aids.

**Revendications**

1. Emulsions eau dans l'huile de polymères en émulsion dissous dans l'eau et/ou gonflables dans l'eau, dans une phase huileuse liquide non miscible à l'eau de manière illimitée, en présence d'émulsifiants eau dans l'huile, caractérisées en ce que la phase huileuse renferme au moins en partie des composés de monoéther, lesdits composés de monoéther portant deux radicaux hydrocarbure identiques ou différents, liés via l'oxygène d'éther et comportant au moins 5 atomes de C.

2. Emulsions selon la revendication 1, caractérisées en ce que la phase huileuse renferme des composés de monoéther portant des radicaux hydrocarbure, aliphatiques, cycliques et/ou aromatiques, saturés et/ou insaturés identiques ou différents, comportant 5 à 24 atomes de C, de préférence jusqu'à 18 atomes de C, les radicaux hydrocarbure des composés d'éther pouvant être substitués par des groupes inertes.

3. Emulsions selon une des revendications 1 à 2, caractérisées en ce que la phase huileuse renferme des composés de monoéther portant des radicaux hydrocarbure aliphatiques, ramifiés ou linéaires identiques ou différents, comportant 6 à 14 atomes de C.

4. Emulsions selon une des revendications 1 à 3, caractérisées en ce que la phase huileuse renferme des composés de monoéther portant des radicaux hydrocarbure aliphatiques, ramifiés ou linéaires identiques ou différents, comportant 7 à 12 atomes de C.

5. Emulsions selon une des revendications 1 à 4, caractérisées en ce que la phase huileuse renferme des composés de monoéther portant des radicaux hydrocarbure aliphatiques linéaires, comportant 8 à 10 atomes de C.

6. Emulsions selon une des revendications 1 à 5, caractérisées en ce que la phase huileuse renferme les composés de monoéther portant des radicaux hydrocarbure aliphatiques linéaires comportant 6 à 14 atomes de C, en proportions supérieures à 30 % en poids, de préférence comprises entre 50 et 100 % en poids, par rapport aux composés d'éther.

7. Emulsions selon une des revendications 1 à 6, caractérisées en ce que la phase huileuse renferme les composés de monoéther en proportions supérieures à 10 % en poids, de préférence comprises dans l'intervalle de 30 à 100 % en poids et, en particulier, supérieures à 45 % en poids, par rapport à la phase huileuse.

8. Emulsions selon une des revendications 1 à 7, caractérisées en ce que la phase huileuse renferme, en mélange avec les composés de monoéther, des composants organiques miscibles avec celle-ci de manière illimitée, faisant partie du groupe constitué des hydrocarbures, graisses, huiles, monoesters d'acides gras, diesters d'acides carbonique et/ou esters d'acides dicarboxyliques.

9. Procédé de fabrication d'émulsions eau dans l'huile de polymères en émulsion dissous dans l'eau ou gonflables dans l'eau, caractérisé en ce que la polymérisation est opérée en présence d'émulsifiants eau dans l'huile dans une émulsion eau dans l'huile, dont la phase huileuse liquide non miscible de manière illimitée à l'eau renferme, au moins en partie, des composés de monoéther, lesdits composés de monoéther portant deux radicaux hydrocarbure identiques ou différents, liés via l'oxygène d'éther et comportant au moins 5 atomes de C.

10. Utilisation d'émulsions eau dans l'huile inversées de polymères en émulsion dissous dans l'eau ou gonflables dans l'eau, à base de polyacrylamides dans une phase huileuse liquide non miscible à l'eau de manière illimitée, qui renferme, au moins en partie, des composés de monoéther, lesdits composés de monoéther portant deux radicaux hydrocarbure identiques ou différents, liés via l'oxygène d'éther et comportant au moins 5 et, au maximum, 24 atomes de C, comme épaississant et/ou comme adjuvant de floculation et/ou de sédimentation.